# FASCICULE DE BREVET EUROPEEN

(11) **EP 0 524 877 B1**
(45) Date de publication et mention de la délivrance du brevet: **14.12.1994**
(21) Numéro de dépôt: 92402111.6
(22) Date de dépôt: 22.07.1992
(51) Int. Cl.: B60H 1/00, F16K 11/14

(54) **Dispositif de commande de volets, notamment de volets d'un appareil de chauffage ventilation et/ou de climatisation**
Betätigungsvorrichtung für Klappen, insbesondere eines Gerätes für Heizung und/oder Klimatisierung
Butterfly valve actuation device, especially butterfly valves for a heating and/or air-condition apparatus

(30) Priorité: 23.07.1991 FR 9109294
(43) Date de publication de la demande: 27.01.1993
(73) Titulaire: VALEO THERMIQUE HABITACLE, 78320 Le Mesnil-Saint-Denis (FR)
(72) Inventeur: Camoni, Jacky, F-28400 Nogent le Rotrou (FR)
(74) Mandataire: Gamonal, Didier

(56) Documents cités:
- EP-A- 0 411 399
- DE-C- 735 292
- FR-A- 2 461 152

## Description

La présente invention se rapporte à un dispositif de commande de volets, notamment de volets d'un appareil de chauffage ventilation et/ou de climatisation comportant deux volets commandés simultanément et à distance l'un de l'autre, chacun des volets étant apte à obturer un orifice d'un conduit en étant chacun actionné par un même arbre de commande. Un tel dispositif est connu par exemple de EP-A-0 411 399.

Il a été constaté que, dans de telles dispositions, ces volets étant déplaçables en rotation simultanément par un même moyen de commande, par exemple, par le même arbre de commande et que, compte tenu des dispersions de tolérances de fabrication et/ou de montage, il pouvait se produire un décalage angulaire entre les deux volets, ce qui donnait une configuration dans laquelle un seul des volets obture de manière étanche l'orifice en regard, alors que l'autre des volets est arrivé dans une position telle qu'il n'obture pas de manière étanche son orifice, voire même laisse un léger jeu d'ouverture, ce qui a pour inconvénient de laisser passer de l'air dans le conduit correspondant.

L'invention se propose de remédier aux inconvénients mentionnés ci-dessus en proposant un dispositif de commande de volets, dans lequel il peut être assuré de manière certaine que chacun des volets porte sur l'orifice en correspondance de manière à l'obturer de manière étanche.

Pour cela, la présente invention propose un dispositif de commande de volets, notamment de volets d'un appareil de chauffage ventilation et/ou de climatisation portant deux volets à distance l'un de l'autre, chacun des volets étant apte à obturer un orifice d'un conduit en étant actionné chacun par un même moyen de commande est caractérisé en ce que l'un au moins des volets est relié au moyen de commande par un accouplement souple en rotation.

Grâce à l'invention, l'accouplement souple permet de pouvoir absorber les éventuelles tolérances de fabrication et/ou de montage en assurant de manière étanche l'obturation des orifices qu'il commande et cela même si les deux volets présentent un décalage angulaire non souhaité.

Les autres caractéristiques et avantages vont ressortir maintenant de la description qui va suivre en se référant aux dessins annexés parmi lesquels :
- la figure 1 est une vue de dessus d'un appareil de chauffage ventilation et/ou de climatisation équipé d'un dispositif de commande selon l'invention ;
- la figure 2 est une vue schématique en coupe selon la ligne B-B de la figure 1, montrant un premier exemple de réalisation du dispositif de commande selon l'invention ;
- la figure 3 est une vue à plus grande échelle du détail signalée par la flèche A de la figure 2 ;
- la figure 4 est une vue en coupe partielle selon la ligne C-C de la figure 3 ;
- la figure 5 est une vue schématique en coupe pris selon la ligne B-B de la figure 1, montrant un deuxième exemple de réalisation de l'invention ;
- la figure 6 est une vue schématique en coupe pris selon la ligne B-B de la figure 1, montrant un troisième exemple de réalisation de l'invention ;
- la figure 7 est une vue de détail signalée sur la figure 6 par le repère P ;
- la figure 8 est une vue partielle en coupe selon la ligne F-F de la figure 7 ;
- la figure 9 est une vue en coupe partielle selon la ligne E-E de la figure 7.

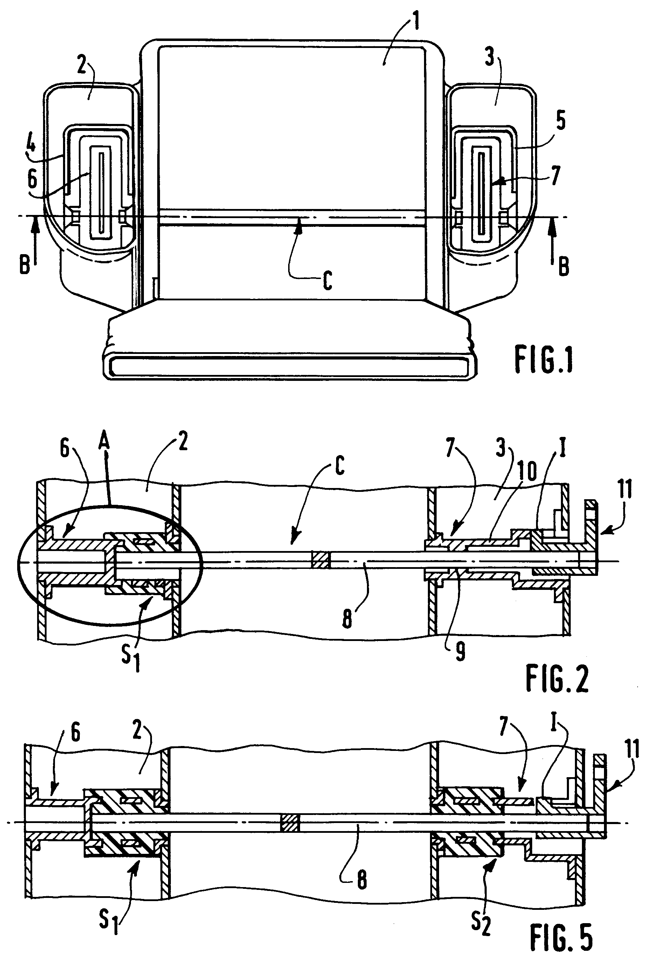

En se référant maintenant à la figure 1, un appareil de chauffage ventilation et/ou de climatisation comprend un boîtier 1 muni sur ses faces latérales d'un conduit de sortie 2,3 qui peut diriger l'air traité à l'intérieur du boîtier 1, soit vers le pare-brise, soit vers les aérateurs, que comporte habituellement le tableau de bord d'un véhicule automobile, ce boîtier pouvant comporter en outre d'autres conduits.

Les conduits 2,3 portent au niveau du boîtier 1 des orifices d'entrées respectivement 4,5 qui sont aptes chacun à être obturé par un volet 6,7 et cela de manière étanche.

Ces deux volets sont commandés simultanément par un moyen de commande C qui, dans le cas de la figure 2, est un arbre de commande 8 unique qui commande simultanément les deux volets associés.

L'arbre de commande 8 présente une section non circulaire, ici de section carrée, et coopère à l'une de ses extrémités directement et coaxialement avec un alésage 9 de forme complémentaire prévu à l'extrémité de l'axe 10 de pivotement d'un des volets, ici le volet 7, et en regard dudit arbre.

L'autre extrémité de l'axe 10 porte un levier de commande 11 se situant au-delà de la paroi externe du conduit 3 et qui est actionné par tout moyen connu, tel qu'un câble ou un moto-réducteur en étant immobilisé en translation par rapport à l'axe 10 par un doigt indexable I venant s'encliqueter dans une ouverture porté par ledit axe et cela de manière connue.

Préférentiellement, le levier 11 est également lié en rotation à l'arbre 8 par coopération d'une ouverture qui porte ce levier de manière à entraîner en rotation le volet 7 par l'intermédiaire de la coopération de l'alésage 9 et de l'arbre 8.

A l'autre de ses extrémités, l'arbre 8 coopère avec un accouplement S1 porté par l'autre des volets, ici le volet 6.

Ainsi sous l'action du levier 11, l'arbre de commande 8 est adapté à entraîner simultanément en rotation les volets 6 et 7, l'arbre 8 étant dans ce cas le même moyen de commande agissant simultanément sur les deux volets.

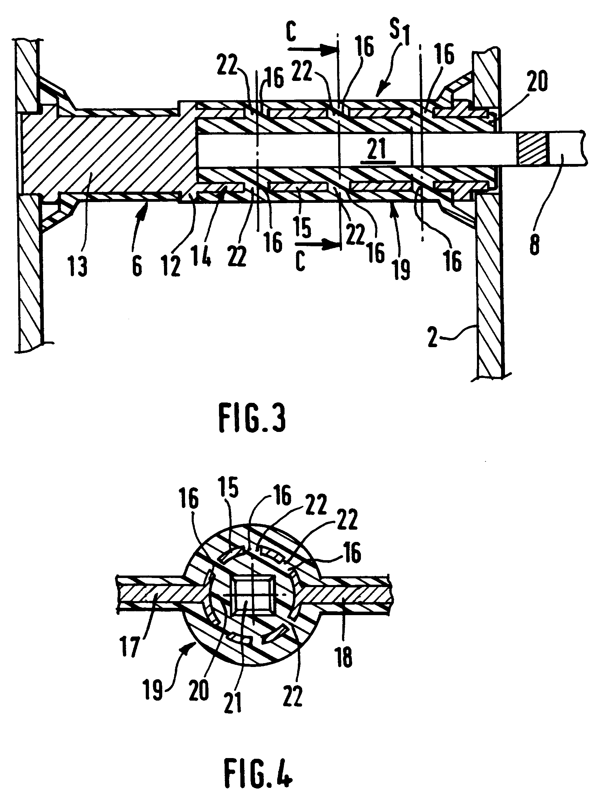

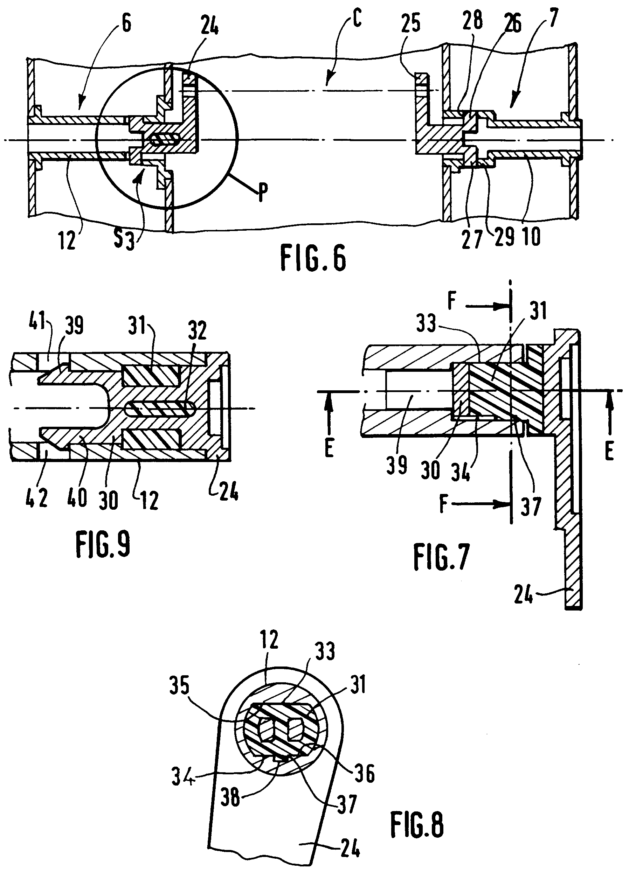

En se référant en plus aux figures 3 et 4, le volet 6 présente un axe 12 qui comporte une partie pleine 13 se prolongeant par une partie tubulaire 14 ouverte en direction de l'arbre 8, cette partie tubulaire étant de dimension radiale supérieure à la dimension radiale de l'arbre 8.

La partie tubulaire 14 présente sur sa paroi tubulaire 15 des perforations 16 régulièrement réparties circonférentiellement et suivant la direction axiale de cette paroi tubulaire.

Comme visible sur la figure 4, l'axe 12 est relié de manière fixe et rigide, cela à titre d'exemple et comme cela est connu, à des ailes 17,18 situées de part et d'autre de cet axe. Ces ailes sont en partie ou en totalité recouvertes de matière assurant une étanchéité, telle qu'une matière élastomère déposée par surmoulage sur l'axe et les ailes 16,17 de manière à fournir un volet.

Ainsi, il est profité de l'opération de surmoulage pour élaborer un manchon 19 en élastomère qui recouvre la partie tubulaire 14, et pénètre par les perforations 16 à l'intérieure de la partie 14 pour former un fourreau 20 creux présentant un volume intérieur 21 de section et de dimension au plus égal à la section et la dimension de l'arbre 8.

De ce fait, le manchon 19 est formé, par une couche de matière élastomère recouvrant la partie tubulaire 14, relié au fourreau creux 20 par des pattes de liaison 22 traversant les perforations 16.

Grâce à ce manchon, l'arbre 8 est relié à l'axe 12 de manière élastique et cela dans un mouvement de débattement angulaire autour de l'axe général formé par l'arbre 8 et l'axe 12.

Ainsi en fonctionnement, lorsque l'on agit sur le levier 11, et que le décalage angulaire, entre le volet 6 et 7, est tel que le volet 6 viendra obturer le conduit 2 avant que le volet 7 obture le conduit 3, de par l'accouplement souple réalisé au niveau du volet 6 et cela en continuant le mouvement par le levier 11, l'arbre de commande 8 continuera à actionner le volet 7 en le faisant pivoter autour de l'axe matérialisé par l'arbre 8 de façon à ce que le contact étanche du volet 7 avec l'orifice 5 soit obtenu alors que l'arbre 8, grâce à l'élasticité de l'accouplement S1, peut tourner dans l'axe 12 du volet 6 sans entraver l'étanchéité assurée par ce volet.

Ainsi grâce à ce dispositif, même en cas de décalage angulaire connu d'un des volets par rapport à l'autre, l'accouplement souple permettra d'obtenir de manière certaine l'obturation étanche des deux orifices 4 et 5.

On se réfère maintenant à la figure 5 qui montre un deuxième exemple de réalisation de l'invention, dans lequel il est prévu que chaque volet 6,7 soit lié à l'arbre de commande 8 par un accouplement souple S1,S2 identique à celui décrit en relation avec les figures 2 à 4.

Dans ce cas, il est indifférent de connaître le décalage angulaire d'un volet par rapport à l'autre, chaque accouplement souple pouvant remédier à ce décalage.

On se réfère maintenant à la figure 6 qui montre une disposition dans laquelle les deux volets 6,7 doivent être commandés simultanément par un même moyen de commande C, mais dans le cas de cette figure, chaque volet est entraîné en rotation par un levier indépendant respectivement 24,25 entraîné chacun simultanément par le même moyen d'actionnement, tel que câble, moteur électrique.

Dans le cas de cette figure, le même moyen de commande C est constitué de deux leviers 24,25 entraînés simultanément et agissant en même temps sur les volets 6,7.

Dans le cas de la figure 6, le volet 7 est entraîné en rotation directement par le levier 25 et ce levier 25 est lié en rotation et en translation par deux doigts élastiques 26,27 qui coopèrent avec des ouvertures 28,29 portées par l'axe 10.

Le volet 6 est également entraîné en rotation par le levier 24 mais porte un accouplement souple S3 disposé entre ledit levier et ledit volet.

Pour ce faire, et en se référant aux figures 7 à 9, le levier 24 comporte un axe 30 qui porte un moyeu élastique 31, tel qu'en élastomère, entourant ledit axe en traversant une lumière 32 que porte cet axe.

Ce moyeu élastique présente une section munie d'au moins une surface plane, ici deux 33,34 parallèles entre elles venant coopérer avec deux parois planes 35,36 prévues sur l'axe 12 du volet 6.

Préférentiellement, le moyeu 31 présente une protubérance 37 faisant saillie par rapport à l'axe 34 des surfaces planes et venant coopérer avec une rainure 38 prévue en correspondance sur l'axe 12 de manière à créer un indexage du levier 24 sur le moyeu 31.

Comme mentionné, l'axe 30 présente deux doigts élastiques 39,40 aptes à coopérer avec des ouvertures 41,42 prévues sur l'axe 12 de manière à ce que le levier soit immobilisé en translation par rapport à cet axe.

Ainsi en fonctionnement, lorsque le moyen de commande actionne simultanément les leviers 24,25, si le volet 7 a un décalage angulaire par rapport au volet 6, tel que le volet 6 obture le conduit 2 alors que le volet 7 n'obture pas totalement le conduit 3 il suffira de continuer le mouvement de commande pour que, grâce à l'accouplement souple S3, le volet 7 continue sa rotation pour obturer convenablement l'orifice 5 du conduit 3 alors que le volet 6 a déjà obturé l'orifice 4 du conduit 2.

Plus précisément, l'axe 30 du levier 24 continuera son mouvement de rotation mais, le volet 6 étant bloqué en position de fermeture du conduit, la matière élastomère du moyeu 31 se comprimera en autorisant la rotation dudit axe et de ce fait autorisera également la rotation du levier 25 en ne créant aucune résistance.

Dans le cas de cette figure, le même moyen de commande C est constitué des deux leviers 24,25 entraînés simultanément et agissant en même temps sur les volets 6,7.

Dans les cas des figures 6 à 9, il peut être prévu que chaque volet 6 et 7 soit relié au levier de commande 24,25 par un accouplement souple.

Grâce à ces deux accouplements souples, il n'est plus nécessaire de connaître précisément le décalage angulaire entre les deux volets.

## Revendications

1. Dispositif de commande de volets, notamment de volets d'un appareil de chauffage ventilation et/ou de climatisation comportant deux volets (6,7) à distance l'un de l'autre, chacun des volets étant apte à obturer un orifice (4,5) d'un conduit (2,3), en étant chacun actionné par un même moyen de commande (C), caractérisé en ce que l'un au moins des volets (6,7) est relié au moyen de commande (C) par un accouplement souple en rotation (S1,S2,S3).

2. Dispositif de commande selon la revendication 1, caractérisé en ce que l'accouplement souple en rotation (S1,S2) est constitué d'un manchon élastique (19).

3. Dispositif de commande selon la revendication 2, caractérisé en ce que le manchon élastique (19) comporte un fourreau creux (20).

4. Dispositif de commande selon la revendication 1, caractérisé en ce que l'accouplement souple en rotation (S3) est un moyeu élastique (31).

5. Dispositif de commande selon l'une des revendications précédentes, caractérisé en ce que l'accouplement souple en rotation (S1,S2,S3) porte une protubérance (37) coopérant avec une rainure (38).

6. Dispositif de commande selon l'une des revendications 1 à 3, caractérisé en ce que le manchon élastique (19) est porté par l'axe (10,12) du volet (6,7).

7. Dispositif de commande selon l'une des revendications précédentes, caractérisé en ce que le moyen de commande (C) est un arbre (8) commun aux deux volets.

8. Dispositif de commande selon l'une des revendications 1 à 6, caractérisé en ce que le moyen de commande (C) est deux leviers (24,25) entraînés simultanément et liés aux volets (6,7).

9. Dispositif de commande selon la revendication 4 et 8, caractérisé en ce que le moyeu (31) est porté par l'axe (30) du levier (24,25).

## Claims

1. An actuating device for flap valves, in particular flap valves of an apparatus for ventilation and/or air conditioning, comprising two flap valves (6, 7) spaced apart from each other, with each of the flap valves being adapted to obturate a port (4, 5) of a duct (2, 3), each being operated by a common control means (C), characterised in that at least one of the flap valves (6, 7) is coupled to the control means (C) through a flexible rotary coupling (S1, S2, S3).

2. An actuating device according to Claim 1, characterised in that the flexible rotary coupling (S1, S2) comprises a resilient sleeve (19).

3. An actuating device according to Claim 2, characterised in that the resilient sleeve (19) includes a hollow bush (20).

4. An actuating device according to Claim 1, characterised in that the flexible rotary coupling (S3) is a resilient hub (31).

5. An actuating device according to one of the preceding Claims, characterised in that the flexible rotary coupling (S1, S2, S3) carries a projecting element (37) cooperating with a groove (38).

6. An actuating device according to one of Claims 1 to 3, characterised in that the resilient sleeve (19) is carried by the spindle (10, 12) of the flap valve (6, 7).

7. An actuating device according to one of the preceding Claims, characterised in that the control means (C) is a shaft (8) common to both flap valves.

8. An actuating device according to one of Claims 1 to 6, characterised in that the control means (C) is two levers (24, 25), driven simultaneously and coupled to the flap valves (6, 7).

9. An actuating device according to Claims 4 and 8, characterised in that the hub (31) is carried by the axis element (30) of the lever (24, 25).

## Patentansprüche

1. Betätigungsvorrichtung für Klappen, insbesondere eines Gerätes für Heizung und/oder Klimatisierung mit zwei in einem Abstand voneinander angeordneten Klappen (6, 7), wobei jede der Klappen eine Öffnung (4, 5) eines Kanals (2, 3) verschließen kann, indem sie jeweils durch das gleiche Betätigungsmittel (C) angetrieben werden, **dadurch gekennzeichnet**, daß mindestens eine der Klappen (6, 7) über eine drehelastische Kupplung (S1, S2, S3) mit dem Betätigungsmittel (C) verbunden ist.

2. Betätigungsvorrichtung nach Anspruch 1 , **dadurch gekennzeichnet**, daß die drehelastische Kupplung (S1, S2) aus einer elastischen Muffe (19) besteht.

3. Betätigungsvorrichtung nach Anspruch 2 , **dadurch gekennzeichnet**, daß die elastische Muffe (19) eine Hohlstulpe (20) umfaßt.

4. Betätigungsvorrichtung nach Anspruch 1 , **dadurch gekennzeichnet**, daß es sich bei der drehelastischen Kupplung (S3) um eine elastische Nabe (31) handelt.

5. Betätigungsvorrichtung nach einem der vorangehenden Ansprüche, **dadurch gekennzeichnet**, daß an der drehelastischen Kupplung (S1, S2, S3) eine Ausstülpung (37) angebracht ist, die mit einer Nut (38) zusammenwirkt.

6. Betätigungsvorrichtung nach einem der Ansprüche 1 bis 3 , **dadurch gekennzeichnet**, daß die elastische Muffe (19) am Bolzen (10, 12) der Klappe (6, 7) angebracht ist.

7. Betätigungsvorrichtung nach einem der vorangehenden Ansprüche, **dadurch gekennzeichnet**, daß es sich bei dem Betätigungsmittel (C) um eine für beide Klappen gemeinsame Welle (8) handelt.

8. Betätigungsvorrichtung nach einem der Ansprüche 1 bis 6 , **dadurch gekennzeichnet**, daß es sich bei dem Betätigungsmittel (C) um zwei Hebel (24, 25) handelt, die gleichzeitig angetrieben werden und mit den Klappen (6, 7) verbunden sind.

9. Betätigungsvorrichtung nach Anspruch 4 und 8, **dadurch gekennzeichnet**, daß die Nabe (31) am Bolzen (30) des Hebels (24, 25) angebracht ist.
